# EUROPÄISCHE PATENTANMELDUNG

(11) **EP 0 533 232 A1**
(43) Veröffentlichungstag der Anmeldung: **24.03.1993**
(21) Anmeldenummer: 92202535.8
(22) Anmeldetag: 18.08.1992
(51) Int. Cl.: C01B 3/48, C01B 3/58

(54) **Verfahren zur Erzeugung von Wasserstoff aus einem Rohgas aus der Vergasung fester, flüssiger oder gasförmiger Brennstoffe**

(30) Priorität: 20.09.1991 DE 4131309
(71) Anmelder: METALLGESELLSCHAFT Aktiengesellschaft, D-60015 Frankfurt (DE)
(72) Erfinder: Nicolai, Elisabeth, W-6050 Offenbach (DE); Higman, Christopher, W-6231 Schwalbach (DE)

(57) **Zusammenfassung**

Das Rohgas (10), das H₂, CO und CO₂ enthält, wird einer Hochtemperatur-Konvertierung (11) bei Drücken im Bereich von 10 bis 100 bar und Temperaturen im Bereich von 300 bis 550°C unterzogen. Man erhält ein H₂-reiches Gasgemisch (12) mit einer Temperatur von 300 bis 450°C und einem CO-Gehalt, trocken gerechnet, von höchstens 5 Vol.%. Dieses Gasgemisch wird durch eine Oxidationszone (16) zur selektiven katalytischen Oxidation des Kohlenmonoxids geleitet, aus dem aus der Oxidationszone abgezogenen Gas wird CO₂ entfernt (19). Man erhält ein H₂-Produktgas mit einem CO-Gehalt, trocken gerechnet, von höchstens 3 Vol.%. Zur Feinreinigung kann das H₂-Produktgas durch eine katalytische Methanisierung (22) geleitet werden.

## Beschreibung

Die Erfindung betrifft ein Verfahren zum Erzeugen von Wasserstoff aus einem H₂, CO und CO₂ enthaltenden Rohgas.

In Ullmann's Encyclopedia of Industrial Chemistry, 5. Aufl., Band A12, S. 289-291 ist die Herstellung von Wasserstoff beschrieben, wobei man von schweren Rückstandsölen ausgeht, die durch partielle Oxidation zu einem Wasserstoff und Kohlenoxide enthaltenden Rohgas vergast werden. Beim bekannten Verfahren folgt eine Tieftemperaturwäsche mit Methanol zur Entfernung von Schwefelverbindungen, eine CO-Konvertierung und eine erneute Tieftemperatur-Wäsche zum Entfernen von CO₂. Für die Feinreinigung des wasserstoffreichen Gases wird das Verfahren der Druckwechsel-Adsorption vorgeschlagen.

Der Erfindung liegt die Aufgabe zugrunde, auf möglichst einfache und kostengünstige Weise Wasserstoff zu erzeugen, der für verschiedene großtechnische Anwendungen, z.B. in Raffinerien, eine ausreichende Reinheit besitzt und mit relativ hohem Druck zur Verfügung gestellt werden kann. Erfindungsgemäß wird dies dadurch erreicht, daß man das Rohgas einer Hochtemperatur-Konvertierung bei Drücken im Bereich von 10 bis 100 bar und Temperaturen im Bereich von 300 bis 550°C unterwirft und aus der Hochtemperatur-Konvertierung ein H₂-reiches, CO₂ enthaltendes Gasgemisch mit einer Temperatur von 300 bis 450°C und einem CO-Gehalt, trocken gerechnet, von höchstens 5 Vol.% abzieht, daß man das Gasgemisch durch eine Oxidationszone zur selektiven katalytischen Oxidation des Kohlenmonoxids leitet und aus dem aus der Oxidationszone abgezogenen Gas CO₂ entfernt, wobei ein H₂-Produktgas mit einem CO-Gehalt, trocken gerechnet, von höchstens 3 Vol.% entsteht. Vorzugsweise erhält man nach der Oxidationszone und der CO₂-Entfernung ein H₂-Produktgas, dessen CO-Gehalt, trocken gerechnet, höchstens 1 Vol.% beträgt.

Für die Wirtschaftlichkeit des Verfahrens ist es wichtig, daß man in der Konvertierung bei hohen Drücken und mit ausreichendem Abstand vom Wasserdampf-Taupunkt arbeitet. Man verwendet dort einen unempfindlichen Katalysator, z.B. einen Eisenkatalysator, und läßt einen relativ hohen CO-Gehalt im aus der Konvertierung abgezogenen Gas zu. In der nachfolgenden Oxidationszone wird dieses CO durch selektive katalytische Oxidation weitgehend entfernt.

Die selektive katalytische Oxidation von CO zu CO₂ in Gegenwart von Wasserstoff ist an sich bekannt und in den US-Patenten 3 631 073 und 4 238 468 sowie im GB-Patent 1 555 826 und in der deutschen Auslegeschrift 15 67 492 beschrieben. Sie kann vorteilhafterweise bei relativ hohen Drücken im Bereich von 10 bis 100 bar betrieben werden.

Die Erzeugung des Rohgases, das H₂, CO und CO₂ enthält, erfolgt auf an sich bekannte Weise. Als Ausgangsmaterial können feste, flüssige oder gasförmige Brennstoffe verwendet werden, die man in Gegenwart von Sauerstoff und Wasserdampf vergast, wobei die für die Vergasung notwendige Wärme durch partielle Oxidation aufgebracht wird. Verwendbare Brennstoffe sind z.B. Kohle, Schweröl, Naphtha oder auch methanhaltige Gasgemische. Falls das Rohgas Schwefelverbindungen enthält, wird es zweckmäßigerweise vor der Hochtemperatur-Konvertierung einer Entschwefelungswäsche unterzogen. Hierfür gibt es bekannte Verfahren, die mit physikalisch oder chemisch wirkenden Waschmitteln arbeiten, z.B. mit Methanol, N-Methyl-Pyrrolidon (NMP) oder Monoethanolamin (MEA). Eine solche oder ähnliche Wäsche kann auch für die Entfernung des CO₂ im Anschluß an die selektive katalytische Oxidationszone eingesetzt werden. Da auch die Wäschen zum Entfernen von Schwefelverbindungen oder CO₂ bei hohen Drücken im Bereich von 10 bis 100 bar betrieben werden können, läßt sich Wasserstoff erzeugen, der mit hohem Druck von 10 bis 100 bar zur Verfügung gestellt werden kann.

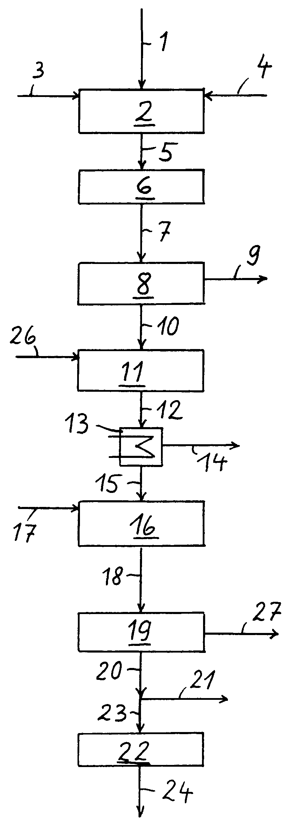

Weitere Einzelheiten der Erfindung werden mit Hilfe der Zeichnung erläutert.

Durch die Leitung (1) werden der Vergasung (2) feste, flüssige oder gasförmige Brennstoffe zugeführt, die mit Sauerstoff aus der Leitung (3) und Wasserdampf aus der Leitung (4) vergast werden. Das Rohgas der Leitung (5) wird zunächst einer Grobreinigung (6) unterworfen, um Feststoffe und z.B. auch Teer zu entfernen. Das in der Leitung (7) abgezogene, grob gereinigte Rohgas wird einer Entschwefelung (8) aufgegeben, in welcher man Schwefelverbindungen, insbesondere H₂S und COS, praktisch vollständig entfernt. Das dabei entstehende H₂S-reiche Abgas kann man in der Leitung (9) z.B. zu einer nicht dargestellten Clausanlage führen, in welcher Elementarschwefel erzeugt wird.

Das entschwefelte Rohgas, das nun noch vor allem aus H₂, CO und CO₂ besteht, wird in der Leitung (10) abgezogen und zu einer Hochtemperatur-Konvertierung (11) geleitet. In der Konvertierung (11) wird CO + H₂O zu CO₂ + H₂ umgesetzt, der nötige Wasserdampf wird durch die Leitung (26) zugeführt. Die Konvertierung arbeitet bei Drücken im Bereich von 10 bis 100 bar und vorzugsweise 20 bis 80 bar sowie bei Temperaturen im Bereich von 300 bis 550°C. Es empfiehlt sich, Eisenkatalysatoren zu verwenden, die auch bei hohen Drücken beständig sind. Man kann die Konvertierung in an sich bekannter Weise zweistufig durchführen, wobei man aus der ersten Stufe ein Gasgemisch mit Temperaturen von 450 bis 550°C abzieht, in der zweiten Stufe bei niedrigeren Temperaturen arbeitet und aus der zweiten Stufe ein Gasgemisch mit Temperaturen von 300 bis 400°C abzieht. Wichtig ist hierbei, daß man die Konvertierung einfach und kostengünstig durchführen kann, da man einen möglichst niedrigen CO-Gehalt im konvertierten Gas nicht anstreben muß. Deshalb kann man auch auf empfindliche Katalysatoren (z.B. Cu-Katalysatoren) verzichten.

Aus der Hochtemperatur-Konvertierung (11) erhält man ein H₂-reiches, CO₂ enthaltendes Gasgemisch in der Leitung (12), dessen CO-Gehalt, trocken gerechnet, höchstens 5 Vol.% und zumeist höchstens 3 Vol.% beträgt. Das konvertierte Gas wird durch einen Kühler (13) geleitet, wobei man gebildetes Kondensat durch die Leitung (14) entfernt. Für die Kühlung kann z.B. ein an sich bekanntes Kühler-Sättiger-System Verwendung finden (vgl. die bereits erwähnte Ullmann's Encyclopedia, Band A12, S. 291). Das gekühlte Gas wird durch die Leitung (15) einer Oxidationszone (16) zugeführt, in welcher man durch selektive katalytische Oxidation CO in CO₂ umwandelt, ohne dabei gleichzeitig in nennenswerter Menge Wasserstoff zu Wasser zu oxidieren. Für die Oxidation des CO gibt man Sauerstoff durch die Leitung (17) in etwa stöchiometrischer Menge zu.

Das wasserstoffreiche Gas, das man in der Leitung (18) aus der Oxidationszone (16) abzieht, unterzieht man einer CO₂-Entfernung (19) und erhält in der Leitung (20) ein H₂-Produktgas mit einem CO-Gehalt, trocken gerechnet, von höchstens 3 Vol.% und zumeist höchstens 1 Vol.%. Ausgewaschenes CO₂ zieht in der Leitung (27) ab. Das H₂-Produktgas besitzt für viele Anwendungsfälle bereits eine ausreichende Reinheit und kann in der Leitung (21) abgezogen werden. Sollte der CO-Gehalt im Gas der Leitung (20) noch weiter reduziert werden, ist eine Methanisierung (22) zweckmäßig, der man das Gas ganz oder teilweise durch die Leitung (23) zuführt. In der Methanisierung (22) werden in an sich bekannter Weise bei Temperaturen von 200 bis 500°C z.B. an einem Nickelkatalysator Kohlenmonoxid und Wasserstoff zu Methan umgewandelt. Man erhält so in der Leitung (24) praktisch CO-freien Wasserstoff, der einen geringen Methangehalt von höchstens 2 Vol.% und zumeist weniger als 1 Vol.% aufweist. Da man auch in der Methanisierung bei Drücken im Bereich von 10 bis 100 bar arbeiten kann, steht in den Leitungen (21) und (24) Wasserstoff mit 10 bis 100 bar und z.B. mit mindestens 20 bar zur Verfügung.

### Beispiel

Es wird von einem Rohgas aus der partiellen Oxidation von Raffinerierückständen ausgegangen, das bereits grob gereinigt ist. Die Weiterverarbeitung erfolgt nach dem Verfahrensschema der Zeichnung, wobei Einzelheiten teilweise berechnet werden. In der Entschwefelung (8) und der CO₂-Entfernung (19) wird mit Methanol als Waschmittel gearbeitet. Die Hochtemperatur-Konvertierung (11) ist zweistufig ausgebildet und benutzt in beiden Stufen Eisenkatalysatoren. Das Gas der Leitung (20) wird vollständig durch eine Methanisierung (22) mit einem Ni-Katalysator geführt.

In der nachfolgenden Tabelle sind die Mengen der Gaskomponenten in den verschiedenen Leitungen in kmol/h, der Druck in bar und die Temperatur in °C angegeben.

| Leitung | 7 | 10 | 15 | 18 | 20 | 24 |
|---|---|---|---|---|---|---|
| CO₂ | 403 | 279 | 6918 | 7411 | 13 | kleiner 10 ppm |
| CO | 7153 | 7153 | 514 | 21 | 20 | kleiner 10 ppm |
| H₂ | 6368 | 6368 | 13007 | 13007 | 12744 | 12632 |
| CH₄ | 38 | 38 | 38 | 38 | 37 | 70 |
| N₂ | 19 | 19 | 19 | 19 | 19 | 19 |
| Ar | 13 | 13 | 13 | 13 | 13 | 13 |
| H₂S | 56 | - | - | - | - | - |
| COS | 2 | - | - | - | - | - |
| Druck | 57,5 | 53,6 | 51,8 | 50,8 | 48,5 | 47,0 |
| Temp. | 40 | 20 | 40 | 40 | 20 | 40 |

## Patentansprüche

1. Verfahren zum Erzeugen von Wasserstoff aus einem H₂, CO und CO₂ enthaltenden Rohgas, dadurch gekennzeichnet, daß man das Rohgas einer Hochtemperatur-Konvertierung bei Drücken im Bereich von 10 bis 100 bar und Temperaturen im Bereich von 300 bis 550°C unterwirft und aus der Hochtemperatur-Konvertierung ein H₂-reiches, CO₂ enthaltendes Gasgemisch mit einer Temperatur von 300 bis 450°C und einem CO-Gehalt, trocken gerechnet, von höchstens 5 Vol.% abzieht, daß man das Gasgemisch durch eine Oxidationszone zur selektiven katalytischen Oxidation des Kohlenmonoxids leitet und aus dem aus der Oxidationszone abgezogenen Gas CO₂ entfernt, wobei ein H₂-Produktgas mit einem CO-Gehalt, trocken gerechnet, von höchstens 3 Vol.% entsteht.

2. Verfahren nach Anspruch 1, dadurch gekennzeichnet, daß man für die Kochtemperatur-Konvertierung einen Eisenkatalysator verwendet.

3. Verfahren nach Anspruch 1 oder 2, dadurch gekennzeichnet, daß man das H₂-Produktgas zur weitgehenden Entfernung von CO einer katalytischen Methanisierung unterzieht und ein H₂-Gas mit einem Methangehalt, trocken gerechnet, von höchstens 2 Vol.% erzeugt.

4. Verfahren nach Anspruch 1, 2 oder 3, dadurch gekennzeichnet, daß man das Rohgas vor der Hochtemperatur-Konvertierung entschwefelt.

5. Verfahren nach einem der Ansprüche 1 bis 4, dadurch gekennzeichnet, daß man das Rohgas durch Vergasen fester, flüssiger oder gasförmiger Brennstoffe erzeugt.

6. Verfahren nach Anspruch 5, dadurch gekennzeichnet, daß man das Rohgas durch Vergasen flüssiger Kohlenwasserstoffe mit Sauerstoff und Wasserdampf erzeugt.
